**Europäisches Patentamt**

(19) **European Patent Office**

**Office européen des brevets**

(11) Numéro de publication: **0 014 909**
**B1**

(12) **FASCICULE DE BREVET EUROPEEN**

(45) Date de publication du fascicule du brevet:
**14.07.82**

(21) Numéro de dépôt: **80100632.1**

(22) Date de dépôt: **07.02.80**

(51) Int. Cl.³: **H 01 M 4/58**

(54) Matière active positive pour générateur électrochimique à électrolyte non aqueux et générateur électrochimique comprenant une telle matière active.

(30) Priorité: **14.02.79 FR 7903772**

(43) Date de publication de la demande:
**03.09.80 Bulletin 80/18**

(45) Mention de la délivrance du brevet:
**14.07.82 Bulletin 82/28**

(84) Etats contractants désignés:
**AT BE CH DE FR GB IT LU NL SE**

(56) Documents cités:
**FR-A-2 159 665**

(73) Titulaire: **GIPELEC S.A., 125, rue du Président Wilson, F-92302 Levallois-Perret (FR)**

(72) Inventeur: **Lecerf, André, 24, avenue Le Brix, F-35740 Pace (FR)**

(74) Mandataire: **Weinmiller, Jürgen et al, Zeppelinstrasse 63, D-8000 München 80 (DE)**

BUNDESDRUCKEREI BERLIN

Matière active positive pour générateur électrochimique à électrolyte non aqueux
et générateur électrochimique comprenant une telle matière active

L'invention concerne une matière active positive pour générateur électrochimique à électrolyte non aqueux, et plus particulièrement pour générateur comportant une électrode négative à base d'un métal alcalin ou alcalino-terreux, notamment de lithium. L'invention concerne également un générateur électrochimique comprenant une telle matière active.

On connaît des piles à électrolyte non aqueux dont les matières actives sont le chromate d'argent et le lithium. Ces piles ont une tension de décharge supérieure à 2 volts, particulièrement convenable pour certaines applications. Malheureusement, le chromate d'argent est une matière active coûteuse, en raison de l'argent qu'elle contient.

Le but de l'invention est de remplacer le chromate d'argent par une matière active contenant moins d'argent ou n'en contenant pas du tout et présentant un potentiel de décharge du même ordre.

L'invention a pour objet une matière active positive pour générateur électrochimique à électrolyte non aqueux, caractérisée par le fait qu'elle est constituée par un chromate double de bismuth pris dans le groupe formé par le bichromate de bismuth et d'argent $AgBi(Cr_2O_7)_2$, le bichromate de bismuth et de thallium $TIBi(CrO_7)_2$ et le chromate de bismuth et de thallium $TIBi(CrO_4)_2$.

On entend par un chromate double de bismuth un sel double de bismuth dont l'anion est formé de chrome hexavalent et d'oxygène, et peut être soit l'anion chromate $CrO_4^{2-}$, soit l'anion bichromate $Cr_2O_7^{2-}$.

Le bichromate double de bismuth et d'argent contient 14,4% d'argent en poids au lieu de 65,0% pour le chromate d'argent.

L'invention a également pour objet un générateur électrochimique comprenant une électrode positive, un électrolyte non aqueux et une électrode négative à base d'un métal alcalin ou alcalino-terreux, et dont l'électrode positive contient une matière active telle que définie ci-dessus.

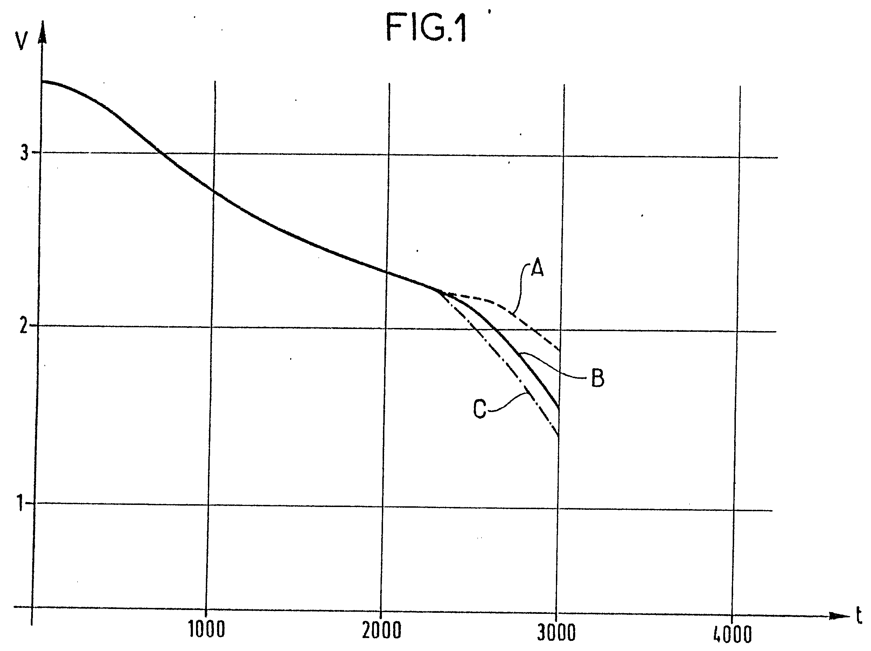

L'invention sera mieux comprise grâce aux exemples décrits ci-après à titre illustratif et non limitatif, en regard du dessin annexé dans lequel les figures 1 à 3 représentent des courbes de décharge de piles électriques selon l'invention.

Les courbes A, B, C de la figure 1 sont relatives à la décharge de trois piles contenant comme matière active positive le bichromate double d'argent et de bismuth $AgBi(Cr_2O_7)_2$.

Ces piles sont des piles boutons du type fréquemment désigné par le symbole numérique 44, c'est-à-dire de diamètre 11,4 mm et de hauteur 5,35 mm, dans lesquelles la quantité de matière active positive est diminuée par rapport aux piles commerciales de ce type, cette diminution étant compensée par une cale d'épaisseur. Elles contiennent 130 mg d'une masse active composée de 95% de bichromate et de 5% de graphite, comprimée sous 1,5 tonne pour obtenir une épaisseur de 0,6 mm, la surface de l'électrode étant 0,6 cm². L'électrode négative contient une quantité de lithium largement excédentaire par rapport à la capacité positive. L'électrolyte est une solution molaire de perchlorate de lithium dans le carbonate de propylène.

On a porté sur la figure 1 la tension V des piles en volts en fonction de la durée t en heures de la décharge de ces piles sur une résistance de 150 kΩ et à une température de 37°C. La capacité obtenue est 30 mAh jusqu'à 2,5 volts pour les trois piles, et 45 à 50 mAh jusqu'à 2 volts. Les capacités massiques correspondantes sont comparables à celles obtenues avec le chromate d'argent.

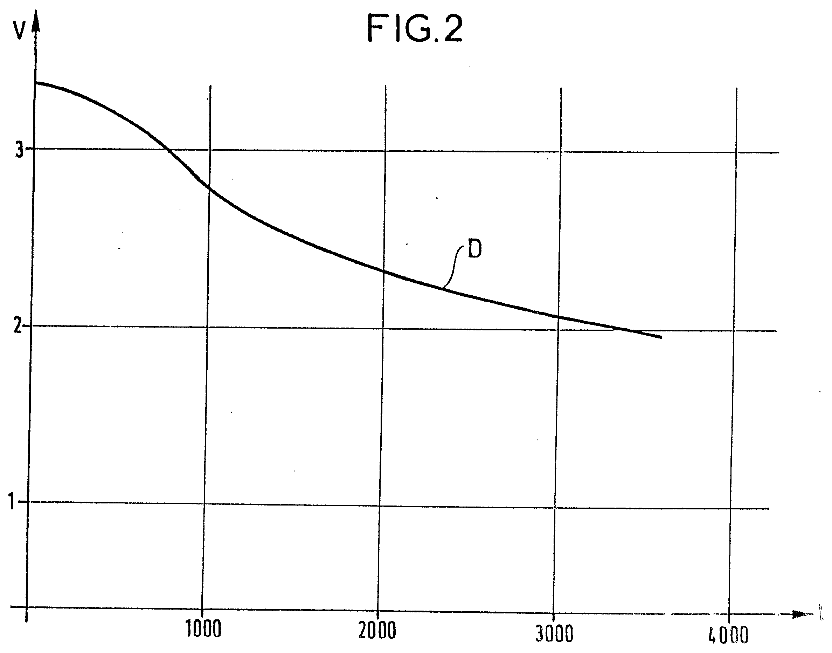

La courbe D de la figure 2 se rapporte à la décharge d'une pile contenant comme matière active positive le bichromate double de thallium et de bismuth $TIBi(Cr_2O_7)_2$.

Cette pile diffère de celles décrites ci-dessus uniquement par la nature de la matière active positive et par la quantité de masse qui est de 200 mg. La figure représente la courbe de décharge de cette pile sur 150 kΩ à température abiante ordinaire. La capacité obtenue est 30 mAh jusqu'à 2,5 V et 54 mAh jusqu'à 2 V.

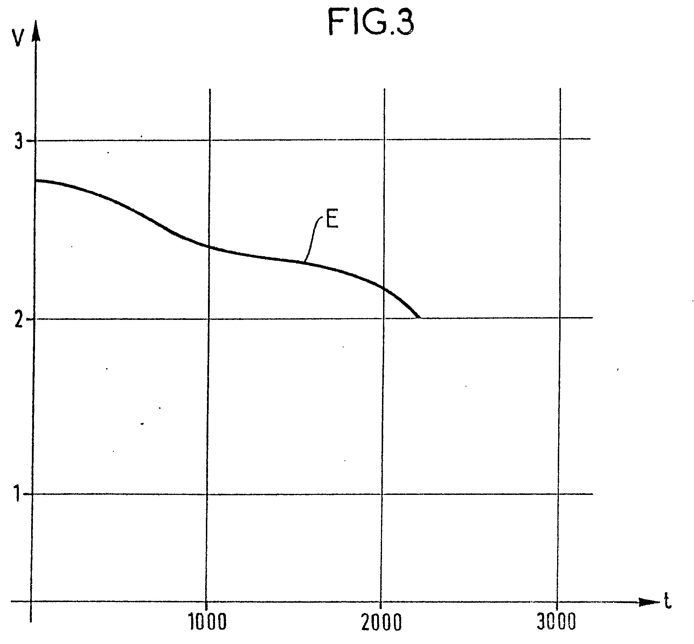

La figure 3 représente une courbe de décharge E d'une pile contenant comme matière active positive le chromate double de thallium et de bismuth $TIBi(CrO_4)_2$.

Cette pile présente les mêmes caractéristiques géométriques que les précédentes. On y a introduit 560 mg de masse active positive contenant 5% de graphite. La décharge a été effectuée sur une résistance de 62 kΩ à température ambiante. La tension de décharge est inférieure à celle des piles précédentes, mais suffisante pour des dispositifs qui exigent seulement une tension d'alimentation supérieure à 2 volts. On obtient pour cette tension d'arrêt une capacité de 85 mAh.

Pour faciliter la reproduction de l'invention, on donnera ciaprès, à titre non limitatif, la description d'un mode de préparation de chacune des matière actives selon l'invention.

Pour obtenir le bichromate double d'argent et de bismuth, on prépare une solution aqueuse saturée de $CrO_3$ à température ambiante, c'est-à-dire 20°C environ. Du nitrate de bismuth $Bi(NO_3)_3, 5 H_2O$ est ajouté à l'état solide dans la proportion de 800 g par litre de solution. Le mélange est agité pendant une heure environ, après quoi on ajoute par petites fractions du bichromate d'argent $Ag_2Cr_2O_7$ en quantité telle que le rapport atomique Ag/Bi soit égal à un, soit 356 g de bichromate d'argent pour 800 g de nitrate de bismuth. Le mélange réactionnel est agité pendant 24 heures environ pour obtenir un rendement optimal qui est de l'ordre de 95%. Le solide est filtré et lavé avec un solvant tel que l'acétone ou le tétrahydrofuranne (l'eau provoquerait une hydrolyse) puis séché de préférence en étuve à vide.

Le bichromate double de thallium et de bismuth peut être obtenu par le même procédé, en remplaçant le bichromate d'argent par la quantité correspondante de bichromate de thallium.

Un simple lavage à l'eau transforme le bichromate double de thallium et de bismuth en chromate double de thallium et de bismuth.

Bien entendu, l'invention n'est pas limitée aux modes de réalisation qui viennent d'être décrits.

## Revendications

1. Matière active positive pour générateur électrochimique à électrolyte non aqueux, caractérisée par le fait qu'elle est constituée par un chromate double de bismuth pris dans le groupe formé par le bichromate de bismuth et d'argent $AgBi(Cr_2O_7)_2$, le bichromate de bismuth et de thallium $TlBi(Cr_2O_7)_2$ et le chromate de bismuth et de thallium $TlBi(CrO_4)_2$.

2. Générateur électrochimique comprenant une électrode positive, un électrolyte non aqueux et une électrode négative à base d'un métal alcalin ou alcalino-terreux, caractérisé par le fait que ladite électrode positive contient une matière active selon la revendication 1.

## Patentansprüche

1. Aktiver positiver Stoff für elektrochemischen Generator mit nichtwäßrigem Elektrolyten, dadurch gekennzeichnet, daß er aus einem doppelten Wismutchromat besteht, das der Gruppe angehört, die aus Bichromat von Wismut und Silber $AgBi(Cr_2O_7)_2$, Bichromat von Wismut und Thallium $TlBi(Cr_2O_7)_2$ und Wismut-Thallium-Chromat $TlBi(CrO_4)_2$ besteht.

2. Elektrochemischer Generator mit einer positiven Elektrode, einem nichtwäßrigen Elektrolyten und einer negativen Elektrode auf der Basis eines alkalischen Metalls oder eines alkalinterrösen Metalls, dadurch gekennzeichnet, daß die positive Elektrode einen aktiven Stoff gemäß Anspruch 1 enthält.

## Claims

1. Active positive material for electrochemical generator with non aqueous electrolyte, characterized in that it is constituted of a double chromate of bismuth which belongs to the group comprising bismuth-silver-bichromate $AgBi(Cr_2O_7)_2$, bismuth-thallium-bichromate $TlBi(Cr_2O_7)_2$ and bismuth-thallium-chromate $TlBi(CrO_4)_2$.

2. Electrochemical generator comprising a positive electrode, a non aqueous electrolyte and a negative electrode based on an alkaline metal or an alkalo-terrene metal, characterized in that the positive electrode contains an active material according to claim 1.

FIG.1

FIG.2

# FIG.3